(19) Europäisches Patentamt
European Patent Office
Office européen des brevets

(11) **EP 2 225 590 B1**

(12) **FASCICULE DE BREVET EUROPEEN**

(45) Date de publication et mention
de la délivrance du brevet:
**26.10.2011 Bulletin 2011/43**

(21) Numéro de dépôt: **08866738.1**

(22) Date de dépôt: **22.12.2008**

(51) Int Cl.:
***G01T 3/00*** *(2006.01)*        ***G01T 1/185*** *(2006.01)*

(86) Numéro de dépôt international:
**PCT/EP2008/068173**

(87) Numéro de publication internationale:
**WO 2009/083537 (09.07.2009 Gazette 2009/28)**

(54) **DISPOSITIF ET PROCEDE DE MESURE DE TAUX DE COMPTAGE**

VERFAHREN UND VORRICHTUNG ZUR MESSUNG EINER ZÄHLRATE

COUNT RATE MEASUREMENT METHOD AND DEVICE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **24.12.2007 FR 0760330**

(43) Date de publication de la demande:
**08.09.2010 Bulletin 2010/36**

(73) Titulaire: **Commissariat à l'Énergie Atomique
et aux Énergies Alternatives
75015 Paris (FR)**

(72) Inventeurs:
- **HUDELOT, Jean-Pascal
  F-04800 Greoux Les Bains (FR)**
- **GIRARD, Jean-Michel
  F-13100 Aix En Provence (FR)**
- **BERNARD, Philippe
  F-13980 Alleins (FR)**
- **SAUREL, Nicolas
  F-21120 Is-sur-tille (FR)**

(74) Mandataire: **Ilgart, Jean-Christophe
BREVALEX
95 rue d'Amsterdam
75378 Paris Cedex 8 (FR)**

(56) Documents cités:
**FR-A- 2 670 301**

- **DATABASE INSPEC [Online] THE INSTITUTION
  OF ELECTRICAL ENGINEERS, STEVENAGE, GB;
  1 octobre 1990 (1990-10-01), JARVIS O N ET AL:
  "In-vessel calibration of the JET neutron
  monitors using a <252>Cf neutron source:
  difficulties experienced" XP002503313 Database
  accession no. 3786041 & 8TH TOPICAL
  CONFERENCE ON HIGH TEMPERATURE
  PLASMA DIAGNOSTICS 6-10 MAY 1990
  HYANNIS, MA, USA, vol. 61, no. 10, 1 octobre 1990
  (1990-10-01), pages 3172-3174, Review of
  Scientific Instruments USA ISSN: 0034-6748**
- **STAMMERS ET AL: "The calibration of the MAST
  neutron yield monitors" NUCLEAR
  INSTRUMENTS & METHODS IN PHYSICS
  RESEARCH, SECTION - A:ACCELERATORS,
  SPECTROMETERS, DETECTORS AND
  ASSOCIATED EQUIPMENT, ELSEVIER,
  AMSTERDAM, NL, vol. 562, no. 1, 15 juin 2006
  (2006-06-15), pages 521-530, XP005458314 ISSN:
  0168-9002**

**Description**

Domaine technique et art antérieur

La présente invention concerne un dispositif de mesure de taux de comptage de chambre à fission ainsi qu'un dispositif d'étalonnage de chambre à fission qui comprend le dispositif de taux de comptage de l'invention. La présente invention concerne également un procédé de mesure de taux de comptage de chambre à fission.

Les chambres à fission sont utilisées pour détecter des neutrons. Une chambre à fission contient de la matière fissile et un gaz susceptible de s'ioniser. Sous l'action des neutrons, la matière fissile émet des particules qui ionisent le gaz. La quantité de gaz ionisé traduit la quantité de neutrons reçus dans la chambre à fission. Seule une partie de la matière fissile, appelée masse efficace (« effective mass » en langue anglaise), participe à l'émission des particules qui ionisent le gaz. Dans la pratique, la connaissance précise de la masse efficace est nécessaire à la détermination des grandeurs physiques absolues que sont le flux neutronique ou les indices de spectres. Le dispositif d'étalonnage de l'invention permet de mesurer la masse efficace de l'isotope fissile.

A ce jour, l'étalonnage des chambres à fission est réalisé en réacteur nucléaire, soit en spectre thermique (ou colonne thermique), soit en spectre de fission. De nombreuses méthodes d'étalonnage ont été développées dans ce cadre. Ces méthodes nécessitent toutes l'utilisation et la disponibilité d'un réacteur de recherche. Pour des raisons de sécurité, ces méthodes nécessitent la mise en place de procédures expérimentales lourdes à mettre en oeuvre et sont, en conséquence, coûteuses. Par ailleurs, les réacteurs de recherche disposant de dispositifs d'étalonnage sont de moins en moins nombreux dans le monde, d'où la nécessité qu'il y a à effectuer des déplacements si l'on veut étalonner des chambres à fission.

Le document FR A 2670301 décrit un dispositif de mesure de taux de comptage d'une chambre à fission comprenant :

- une cellule de mesure qui contient la chambre à fission,
- un générateur de neutrons qui émet des neutrons sous forme d'impulsions périodiques en direction de la chambre à fission,
- un câble de mesure qui prélève, via un connecteur, un signal délivré par la chambre à fission suite à l'interaction des neutrons avec la matière fissile,
- un compteur de neutrons qui délivre un signal de comptage des neutrons émis par le générateur de neutrons.

Les dispositifs d'étalonnage de l'art antérieur présentent de nombreux inconvénients. Le dispositif d'étalonnage de l'invention ne présente pas ces inconvénients.

Exposé de l'invention

L'invention concerne un dispositif du type indiqué ci-dessus, caractérisé en ce qu'il comprend en outre :

- un système de traitement qui délivre, sur une fenêtre temporelle prédéterminée contenue à l'intérieur d'une période d'émission des neutrons émis par le générateur de neutrons, un signal représentatif du signal délivré par la chambre à fission et un signal représentatif du signal de comptage des neutrons, et
- un circuit de calcul de taux de comptage de la chambre à fission normalisé en référence au signal de comptage des neutrons, à partir du signal représentatif du signal délivré par la chambre à fission et du signal représentatif du signal de comptage des neutrons.

Selon une caractéristique supplémentaire de l'invention :

- la cellule de mesure comprend une structure dans laquelle est formée une cavité cylindrique qui débouche par une ouverture sur une paroi de la structure,
- une première enveloppe cylindrique est placée sur une paroi de la cavité cylindrique, la première enveloppe cylindrique contenant la chambre à fission, le connecteur et une première partie du câble de mesure,
- une deuxième enveloppe cylindrique entoure à distance la première enveloppe cylindrique, la première et la deuxième enveloppes cylindriques ayant, chacune, une première extrémité fixée, dans la structure, par une première bague située du côté où la cavité débouche sur la paroi de la structure et une deuxième extrémité fixée, dans la structure, par une deuxième bague,
- une troisième enveloppe cylindrique située à l'extérieur de la structure est sensiblement alignée avec la première enveloppe cylindrique, la troisième enveloppe cylindrique contenant une deuxième partie du câble de mesure qui prolonge la première partie et une bague de centrage qui maintient le câble dans la deuxième enveloppe.

Selon une autre caractéristique supplémentaire de l'invention le dispositif comprend :

- une feuille de matériau qui recouvre la première enveloppe cylindrique, et
- une structure cylindrique creuse placée entre la feuille de matériau et la deuxième enveloppe cylindrique.

Selon encore une autre caractéristique supplémentaire de l'invention la feuille de matériau est une feuille de cadmium.

Selon encore une autre caractéristique supplémentaire de l'invention le matériau qui constitue la structure cylindrique creuse placée sur la feuille de matériau est du borolène.

Selon encore une autre caractéristique supplémentaire de l'invention la première enveloppe cylindrique et la deuxième enveloppe cylindrique sont séparées par un espace rempli d'air.

Selon encore une autre caractéristique supplémentaire de l'invention la structure dans laquelle la cavité est formée est en graphite.

Selon encore une autre caractéristique supplémentaire de l'invention le générateur de neutrons est intégré dans la structure de la cellule de mesure.

Selon encore une autre caractéristique supplémentaire de l'invention le compteur de neutrons est intégré dans la structure de la cellule de mesure.

L'invention concerne également un dispositif d'étalonnage destiné à mesurer une masse efficace de matière fissile contenue dans au moins une chambre à fission, **caractérisé en ce qu'**il comprend un dispositif de mesure de taux de comptage selon l'invention et un circuit de calcul de la masse efficace du matériau fissile à partir du taux de comptage délivré par le circuit de calcul de taux de comptage.

L'invention concerne également un procédé de mesure de taux de comptage d'au moins une chambre à fission qui contient de la matière fissile, comprenant :

- une émission de neutrons sous forme d'impulsions périodiques en direction de la chambre à fission de sorte que la chambre à fission délivre un signal qui résulte de l'interaction des neutrons avec la matière fissile,
- un comptage des neutrons émis pour former un signal de comptage, et étant caractérisé par
- un traitement du signal délivré par la chambre à fission et du signal de comptage sur une fenêtre temporelle prédéterminée contenue à l'intérieur d'une période d'émission des neutrons émis pour délivrer un signal représentatif du signal délivré par la chambre à fission et un signal représentatif du signal de comptage, et
- un calcul du taux de comptage de la chambre à fission normalisé en référence au signal de comptage à partir du signal représentatif du signal délivré par la chambre à fission et du signal représentatif du signal de comptage.

Le dispositif de mesure de taux de comptage de l'invention comprend un générateur de neutrons fonctionnant en mode pulsé.

Le dispositif de l'invention permet avantageusement :

- d'obtenir les grandeurs d'étalonnage avec une précision équivalente à celle obtenue en réacteur, et
- d'obtenir des étalonnages dans divers spectres neutroniques.

Avantageusement, les matériaux et dimensions des différents éléments qui constituent la cellule de mesure dans laquelle est placée la chambre à fission peuvent être déterminés par un procédé de conception compatible, au choix du concepteur, avec un spectre rapide ou avec un spectre thermique des neutrons interrogateurs de la chambre à fission.

Un spectre neutronique rapide est défini en cela que 99.9% des neutrons ont une énergie supérieure à 1 MeV. Un spectre neutronique thermique est défini en cela que 99.9% des neutrons ont une énergie inférieure à 0.625 eV.

Pour chaque type de spectre neutronique, les dispositifs sont adaptés, par exemple, à des chambres à fission de 1.5mm, de 4mm ou 8mm de diamètre.

Brève description des figures

D'autres caractéristiques et avantages de l'invention apparaîtront à la lecture d'un mode de réalisation préférentiel fait en référence aux figures jointes, parmi lesquelles :

- la figure 1 représente un schéma de principe de cellule de mesure qui participe au dispositif de mesure de taux de comptage de l'invention;
- la figure 2 représente une vue en coupe partielle d'un premier exemple de structure qui participe au dispositif de mesure de taux de comptage de l'invention;

- la figure 3 représente une vue en coupe partielle d'un deuxième exemple de structure qui participe au dispositif de mesure de taux de comptage de l'invention;
- la figure 4 représente un schéma de principe de dispositif de taux de comptage de chambre à fission de l'invention ;
- La figure 5 représente un schéma de principe de dispositif d'étalonnage de l'invention ;
- La figure 6 représente, dans le cas d'un spectre neutronique rapide, un exemple de courbe de taux de comptage obtenu par un dispositif de mesure de taux de comptage de l'invention, en fonction de la position occupée par la chambre à fission dans le dispositif de mesure;
- La figure 7 représente, dans le cas d'un spectre neutronique thermique, un exemple de courbe de taux de comptage obtenu par un dispositif de mesure taux de comptage de l'invention, en fonction de la position occupée par la chambre à fission dans le système d'acquisition ;
- La figure 8 représente un exemple de spectre obtenu, sans correction de bruit, par un dispositif de mesure de taux de comptage de l'invention ;
- La figure 9 représente, en configuration de neutrons rapides, un exemple de courbe de taux de comptage obtenue, en fonction du temps, à l'aide d'un dispositif de mesure de taux de comptage de l'invention;
- La figure 10 représente, en configuration de neutrons thermiques, un premier exemple de courbe de taux de comptage obtenue, en fonction du temps, à l'aide d'un dispositif de taux de comptage de l'invention ;
- La figure 11 représente, en configuration de neutrons thermiques, un deuxième exemple de courbe de taux de comptage obtenue, en fonction du temps, à l'aide d'un dispositif de mesure de taux de comptage de l'invention ;
- La figure 12 représente un exemple de taux de comptage obtenu, en configuration de neutrons thermiques ou en configuration de neutrons rapides, au niveau d'un compteur de neutrons qui participe au dispositif de mesure de taux de comptage de l'invention.

Description détaillée de modes de mise en oeuvre de l'invention

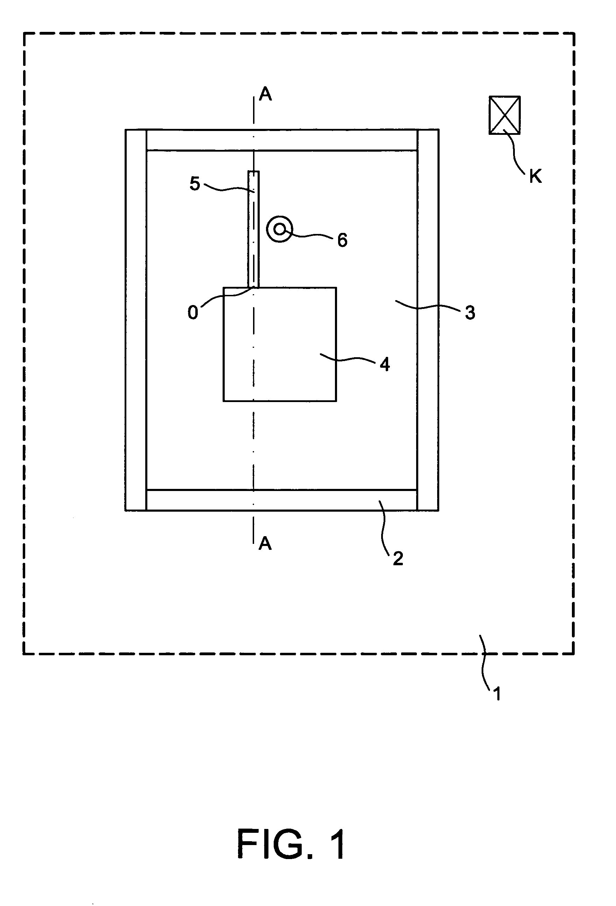

La figure 1 représente une cellule de mesure qui participe au dispositif de mesure de taux de comptage de l'invention. La cellule de mesure 1 est constituée d'une enceinte 2 qui contient un matériau 3 dans lequel est formée une cavité 4 et d'un compteur de neutrons K. Le matériau qui constitue l'enceinte 2 est, par exemple, du polyéthylène et le matériau 3 est, par exemple, du graphite. Une cavité longitudinale 5 apte à recevoir une chambre à fission est formée à l'intérieur du matériau 3. Un générateur de neutrons 6 est placé, dans le matériau 3, à proximité de la cavité 5. La cavité cylindrique 5 débouche sur la cavité 4 par une ouverture O. Dans le mode de réalisation représenté sur la figure 1, le compteur de neutrons K est placé à côté de l'enceinte 2. L'invention concerne également le cas où le compteur de neutrons est situé dans l'enceinte 2.

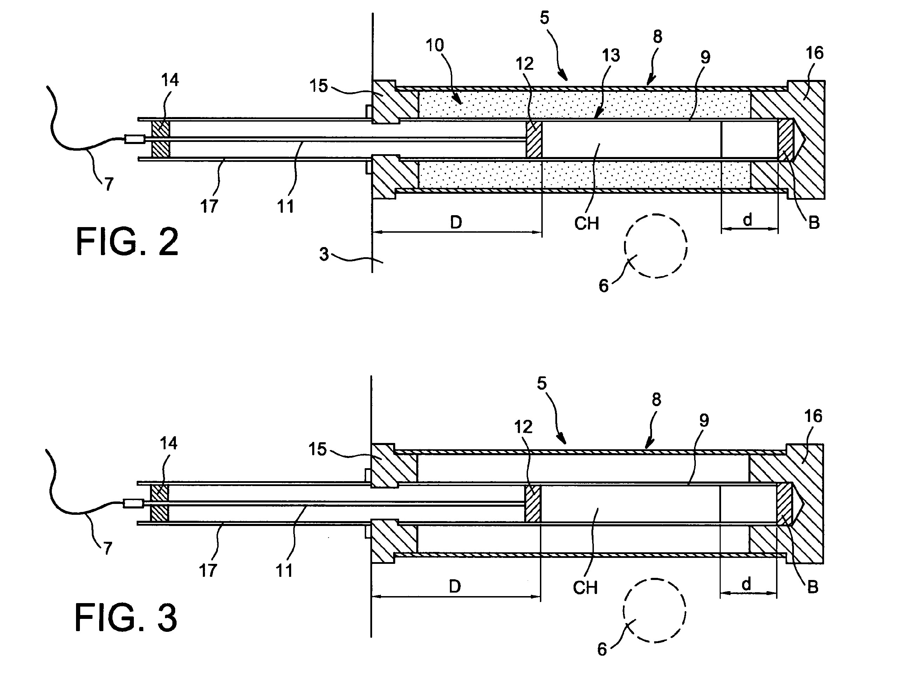

La figure 2 représente une vue en coupe partielle d'un premier exemple de structure qui participe au dispositif de mesure de taux de comptage de l'invention.

La structure représentée en figure 2 est destinée à l'obtention d'un spectre neutronique rapide. La cavité 5 contient deux enveloppes cylindriques coaxiales 8, 9, l'enveloppe 8 entourant l'enveloppe 9. Les enveloppes 8 et 9 sont, par exemple, en inox et ont une épaisseur de 1mm. Une feuille de matériau 13, par exemple une feuille de cadmium de 1mm d'épaisseur, recouvre la face extérieure du cylindre 9. La feuille de matériau 13 a pour fonction de capturer les neutrons thermiques, c'est-à-dire les neutrons dont l'énergie est inférieure à 0,625eV. Un bloc de matériau 10 est placé dans l'espace qui sépare la feuille de matériau 13 et l'enveloppe 8. Le matériau 10, par exemple du borolène (i.e. du bore et du polyéthylène), a une épaisseur égale, par exemple, à 16mm. Deux bagues de centrage 15 et 16 maintiennent et alignent les enveloppes cylindriques 8 et 9 dans la cavité 5. Une butée B ferme la cavité du côté de la bague de centrage 16. La chambre à fission CH est placée dans l'enveloppe cylindrique 9. Une première extrémité de la chambre à fission est reliée à un élément de connexion 12 qui collecte les électrons créés du fait de l'ionisation du gaz contenu dans la chambre. Cette première extrémité de la chambre à fission est placée à une distance D de l'ouverture O, l'autre extrémité de la chambre étant placée à une distance d de la butée B. L'élément de connexion 12 est relié à un câble coaxial rigide 11. Une enveloppe cylindrique 17, par exemple une enveloppe en inox d'épaisseur 1mm, alignée avec l'enveloppe cylindrique 9 est placée dans la cavité 4. Une bague de centrage 14 maintient le câble coaxial rigide 11 dans l'enveloppe cylindrique 17. Un connecteur relie le câble coaxial rigide 11 à un câble de mesure souple 7 qui transmet le signal vers des circuits de traitement (non représentés sur la figure 2 ; voir figure 3).

Le système de guidage et de positionnement constitué par les éléments 14, 15 et 16 garantit avantageusement une bonne reproductibilité de la position axiale de la chambre CH. La précision obtenue pour cette position peut être, par exemple, de l'ordre de 1mm, voire moins.

Les matériaux et dimensions de la structure de l'invention représentée en figure 2 sont préférentiellement obtenus à l'aide du code de calcul neutronique de Monte-Carlo MCNP (MCNP pour « Monte-Carlo N-Particle »). C'est précisément par ce code de calcul que les matériaux et dimensions mentionnés ci-dessus ont été obtenus. Toutefois, d'autres matériaux ayant des caractéristiques équivalentes pourraient également être choisis pour la constitution de cette structure. Le choix de ces autres matériaux impliquerait alors un dimensionnement différent pour l'obtention de performances sensiblement équivalentes. Les matériaux mentionnés ci-dessus permettent toutefois de réaliser un dispositif d'étalonnage ayant des dimensions « acceptables », c'est-à-dire un dispositif ni trop volumineux ni trop encombrant. Le choix de l'inox pour les enveloppes cylindriques 8, 9 et 17 permet d'assurer une excellente rigidité à l'ensemble du dispositif et de garantir sa résistance à l'usure. Le choix du borolène est justifié par la bonne résistance de ce matériau au vieillissement, par son efficacité en termes de capture des neutrons thermiques et par son faible coût.

Le dispositif de centrage 14, 15, 16 de la chambre à fission est spécifique pour chaque diamètre de chambre étudiée. Les bagues de centrage 14, 15, 16 et la butée B sont, par exemple, en inox. Les diamètres des bagues de centrage et l'usinage de la butée B sont adaptés au diamètre du câble coaxial rigide 11. Le dispositif de centrage permet non seulement de maîtriser la position axiale et le centrage radial de la chambre dans le dispositif mais, également, autorise la chambre à fission à coulisser longitudinalement afin d'optimiser la position de mesure (recherche de la position correspondant au taux de comptage maximal). De fait, c'est l'ensemble constitué par la chambre à fission CH, le connecteur 12 et le coaxial rigide 11 qui coulisse dans l'enveloppe 9. Le centrage de cet ensemble est assuré par la bague 14.

Dans la structure décrite ci-dessus, seuls les neutrons n'ayant pas subi de ralentissement/thermalisation dans le graphite de la cellule et dans le borolène pénètrent à l'intérieur de la chambre à fission. Ainsi, la chambre à fission ne voit-elle que les neutrons rapides émis par le générateur 6, c'est-à-dire les neutrons qui n'ont pas subi d'interaction.

La figure 3 représente une vue en coupe partielle d'un deuxième exemple de structure qui participe au dispositif de mesure de taux de comptage de l'invention. La structure de la figure 3 est adaptée à l'obtention d'un spectre neutronique thermique. La cavité 5 comprend tous les éléments constitutifs déjà décrits en référence à la figure 2, à l'exception du bloc de matériau 10 et de la feuille de cadmium 13. L'espace entre les enveloppes 8 et 9 est ici rempli d'air. De même que précédemment, la position de la chambre à fission peut être ajustée longitudinalement à l'aide, par exemple, des moyens de coulissement mentionnés précédemment.

Les neutrons qui sont issus du générateur 6 peuvent ici pénétrer dans la chambre à fission quelles que soit leurs énergies. Toutefois, ces neutrons traversent auparavant une épaisseur de graphite comprise, par exemple, entre 0cm et environ 40cm selon la position occupée par la chambre à fission dans l'enveloppe 9, ce qui permet de discriminer leur énergie en fonction de leur instant d'arrivée au niveau de la chambre à fission, c'est-à-dire en fonction de l'épaisseur de graphite traversée. A titre d'exemple non limitatif, les calculs élaborés à partir du code de Monte-Carlo MCNP4C2 ont montré que plus de 99,9% des neutrons émis par un générateur de neutrons dont la fréquence de tir est de 125Hz sont, après chaque tir, des neutrons thermiques dans une plage de temps comprise entre $700\mu s$ et $3500\mu s$, quelle que soit la position axiale de la chambre dans le dispositif d'étalonnage.

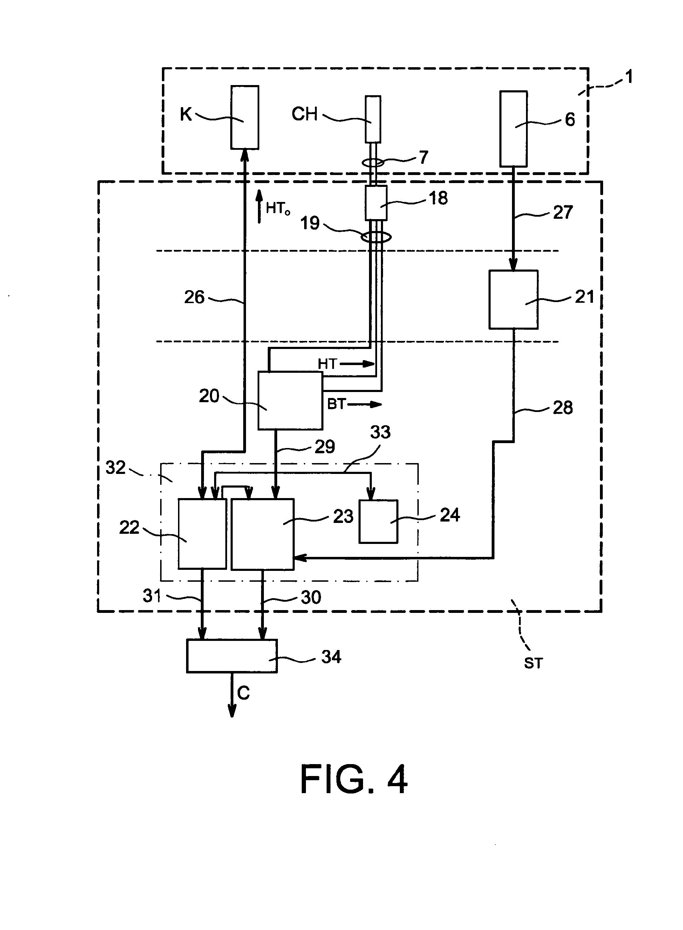

La figure 4 illustre un schéma de principe du dispositif de mesure de taux de comptage de chambre à fission de l'invention. Le dispositif de mesure comprend :

- une cellule de mesure 1 telle que décrite ci-dessus et dans laquelle sont intégrés une chambre à fission CH, générateur de neutrons 6 et un compteur de neutrons K,
- un système de traitement ST des signaux délivrés par la chambre à fission CH et par le compteur K et qui délivre, d'une part, un signal représentatif du signal délivré par la chambre à fission et, d'autre part, un signal représentatif du signal délivré par le compteur K, et
- un circuit de calcul 34 qui calcule le taux de comptage C de la chambre à fission normalisé par rapport au signal délivré par le compteur K à partir des signaux délivrés par le système de traitement ST.

Le système de traitement ST comprend :

- un préamplificateur 18 qui amplifie le signal délivré, via le câble de mesure 7, par la chambre à fission CH,
- un amplificateur 20 relié au préamplificateur 18 par un câble multiconducteur 19 qui transmet en direction de la chambre à fission une haute tension HT et une basse tension BT,
- un circuit électronique 21 relié par un câble 27 au générateur de neutrons 6,
- un circuit d'acquisition 32 qui comprend un amplificateur 22, une carte d'acquisition 23 et un circuit de haute tension 24, l'amplificateur 22 recevant, via un câble 26, le signal délivré par le compteur K et, via une liaison électrique 33, la haute tension délivrée par le circuit 24, le câble 26 alimentant en haute tension $HT_0$ le compteur K, la carte d'acquisition 23 recevant, via une liaison électrique 29, le signal délivré par l'amplificateur 20 et, via une liaison électrique 28, le signal délivré par le circuit électronique 21, l'amplificateur 22 délivrant le signal représentatif du signal délivré par le compteur K et la carte d'acquisition 23 délivrant le signal représentatif du signal délivré par la chambre à fission.

A titre d'exemple non limitatif, la figure 4 représente un dispositif contenant une seule chambre à fission. Toutefois, l'invention concerne plus généralement le cas où le dispositif contient N chambres à fission, N étant un nombre entier supérieur ou égal à 1.

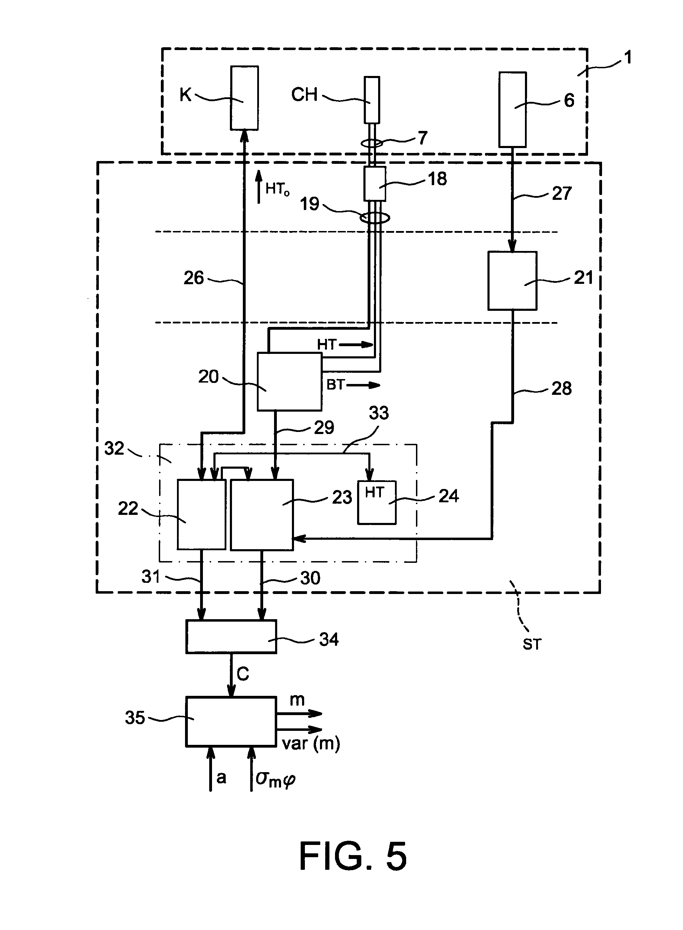

La figure 5 représente un schéma de principe de dispositif d'étalonnage de chambre à fission de l'invention. En plus des éléments mentionnés en relation avec la figure 4, le dispositif d'étalonnage représenté en figure 5 comprend un circuit de calcul 35 qui calcule la masse efficace de la matière fissile contenue dans la chambre à fission à partir du taux de comptage normalisé C délivré par le circuit de calcul 34. Un exemple de procédé de calcul mis en oeuvre par le circuit 34 est donné dans la suite de la description. D'autres procédés de calcul pourraient toutefois être envisagés. Le procédé de calcul sera décrit dans un cas général où N masses fissiles contenues dans N chambres à fission différentes sont calculées simultanément. Chaque chambre à fission contient un isotope principal et des impuretés.

La matrice colonne [m] formée à partir des masses efficaces de matière fissile contenues dans les N chambres à fission s'écrit :

$$[m] = [C] \cdot I ([a] \times [\sigma_m \varphi]) \qquad (1),$$

où

-    [C] est la matrice des taux de comptage (ou nombres de coups par seconde) normalisés des N chambres à fission,
-    [a] est la matrice des analyses isotopiques des N dépôts de matière fissile, normalisées par rapport aux isotopes principaux,
-    $[\sigma_m \varphi]$ est la matrice colonne des sections efficaces massiques intégrales de fission macroscopiques normalisées par rapport compteur K (par « section efficace massique » il faut entendre une section efficace relative à une unité de masse et non à un noyau), et où
-    le symbole « .I » représente l'opérateur de division de matrices et le symbole « x » représente l'opérateur de multiplication de matrices.

La matrice [C] est construite à partir des mesures délivrées par le circuit 34. Les coefficients de la matrice [a] sont déterminés pour chaque matière fissile de chaque chambre à fission, de façon connue en soi, par analyse isotopique. Pour une chambre à fission de dimensions extérieures données (diamètre, longueur), la matrice $[\sigma_m \varphi]$ est invariante pour une position donnée de la chambre à fission dans la cellule de mesure et pour une configuration d'étalonnage donnée du dispositif d'étalonnage (neutrons rapides ou thermiques et plage de temps liée à la nature du spectre). Il est alors possible de déterminer la matrice $[\sigma_m \varphi]$ à l'aide d'une matrice $[\sigma_m \varphi]_0$ particulière qui correspond, pour les conditions d'invariance mentionnées ci-dessus, à des dépôts de matière fissile de masse efficace connue. Il vient alors :

$$\left[\sigma_m \varphi\right]_0 = \left[a\right]_0^{-1} \times \left[m\right]_0^{-1} \times \left[C\right]_0 \qquad (2)$$

où les coefficients des matrices $[a]_0^{-1}$ et $[m]_0^{-1}$ sont connus et les coefficients de la matrice $[C]_0$ sont les taux de comptage mesurés pour les dépôts de matière fissile de masse efficace connue.

La matrice [m] s'écrit alors :

$$[m] = [C] \cdot I ([a] \times [\sigma_m \varphi]_0) \qquad (3)$$

En plus de la matrice [m], le circuit de calcul 35 calcule également la matrice des variances var(m), où var(m) représente la variance de la masse efficace m. L'équation de la matrice des variances est explicitée ci-dessous. L'équation (2) mentionnée ci-dessus peut s'écrire de façon générique sous la forme suivante :

$$[x_{ij}] = [A_{ij}] \times [B_{ij}] \times [C_{ij}],$$

où i est l'indice relatif au rang des lignes de la matrice et j l'indice relatif au rang des colonnes de la matrice.

En faisant l'hypothèse de l'indépendance des termes $A_{ij}$, $B_{ij}$ et $C_{ij}$, c'est-à-dire en supposant l'indépendance des incertitudes sur [C], $[\sigma_m \varphi]$ et [a], la dérivation de l'incertitude conduit à :

$$\left[\mathrm{var}\!\left(\mathrm{X}_{ij}\right)\right] = \left[\mathrm{var}\!\left(\mathrm{A}_{ij}\right)\right] \times \left[\left(\mathrm{B}_{ij}\right)^2\right] \times \left[\left(\mathrm{C}_{ij}\right)^2\right] + \left[\left(\mathrm{A}_{ij}\right)^2\right] \times \left[\mathrm{var}\!\left(\mathrm{B}_{ij}\right)\right] \times \left[\left(\mathrm{C}_{ij}\right)^2\right] + \left[\left(\mathrm{A}_{ij}\right)^2\right] \times \left[\left(\mathrm{B}_{ij}\right)^2\right] \times \left[\mathrm{var}\!\left(\mathrm{C}_{ij}\right)\right]$$

Les variances des matrices $[\sigma_m\varphi]_0$ et $[m]$ s'écrivent alors, respectivement, comme suit :

$$\mathrm{var}[\sigma_m\varphi]_0 = \left[[m]_0 \times [a]_0\right]_{ij}^{2\,-1} \times \left\{\mathrm{var}[c]_0 + \left([m_{ij}^2]_0 \times \mathrm{var}[a]_0 + \mathrm{var}[m]_0 \times [a_{ij}^2]_0\right) \times [\sigma_m\varphi_{ij}^2]_0\right\}$$

et

$$\mathrm{var}[m] = \left\{\mathrm{var}[C] + [m_{ij}^2] \times \left(\mathrm{var}[a] \times [\sigma_m\varphi_{ij}^2]_0 + [a_{ij}^2] \times \mathrm{var}[\sigma_m\varphi]_0\right)\right\} . I \left\{[[a] \times [\sigma_m\varphi])_{ij}^2]\right\}$$

Dans les formules ci-dessus, la notation $\left[Z_{ij}^2\right]$ représente la matrice constituée des termes $z_{ij}$ à la puissance 2, $z_{ij}$ étant le coefficient de la ligne de rang i et de la colonne de rang j de la matrice $[Z]$.

De façon générale, une chambre à fission d'isotope principal i contient des impuretés. Dans la pratique, les impuretés en U-234 et U-236 sont souvent présentes en quantité négligeable dans les chambres Uranium U-233, U-235 ou U-238 et ne posent donc pas de problème. Dans le cas des chambres Pu-238 par exemple, l'impureté U-234 est un produit de la décroissance radioactive du Pu-238 avec une période de 87,7 ans. Si l'on possède une chambre Pu-238 suffisamment récente, la quantité d'U-234 sera donc négligeable.

Dans les cas où il n'est pas possible de négliger les impuretés, le procédé de calcul prend avantageusement en compte leur influence. Les coefficients calculés de la matrice $[m]$ sont alors des masses efficaces équivalentes qui prennent en compte, outre les masses efficaces des isotopes principaux, les masses efficaces des impuretés présentes dans la chambre à fission. A titre d'exemple non limitatif, l'expression d'une masse efficace équivalente d'isotope principal Pu-238 qui contient des impuretés U-234 va maintenant être donnée.

Le nombre équivalent $N_{eq}$ de noyaux d'isotope Pu-238 contenus dans une chambre à fission se calcule avec l'équation suivante :

$$N_{eq} = \left(N_4 \times \frac{\sigma_{4,c}}{\sigma_{8,c}} + N_8\right)$$

où :

- $N_4$ est le nombre de noyaux d'U-234 contenus dans la chambre et connus par analyse,
- $N_8$ est le nombre de noyaux de Pu-238 contenus dans la chambre et connus par analyse,
- ($\sigma_{4,c}$ est la section efficace microscopique de fission de l'impureté U-234, calculée, par exemple, avec le code MCNP4C2, dans les conditions de mesure (intervalle de temps de comptage et spectre neutronique rapide ou thermique étudié),
- $\sigma_{8,c}$ = section efficace microscopique de fission du Pu-238, calculée, par exemple, avec le code MCNP4C2, dans les conditions de mesure (intervalle de temps de comptage et nature rapide ou thermique du spectre neutronique étudié).

La masse efficace équivalente $m_{eq}$ de Pu-238 qui est prise en compte comme coefficient de la matrice $[m]$ est alors donnée par la formule suivante :

$$m_{eq} = m_4 \times \frac{238}{234} \times \frac{\sigma_{m4c}}{\sigma_{m8c}} + m_8$$

où

- $m_4$ est la masse efficace de l'U-234 dans la chambre,
- 238 est le nombre de masse du Pu-238,
- 234 est le nombre de masse de l'U-234,
- $\sigma_{m4c}$ est la section efficace microscopique massique de fission de l'U-234, calculée, par exemple, avec le code MCNP4C2, dans les conditions de mesure (intervalle de temps de comptage et nature rapide ou thermique du spectre neutronique étudié),
- $\sigma_{m8c}$ est la section efficace microscopique massique de fission du Pu-238, calculée, par exemple, avec le code MCNP4C2, dans les conditions de mesure (intervalle de temps de comptage et nature rapide ou thermique du spectre neutronique étudié),
- $m_8$ est la masse efficace de Pu-238 dans la chambre.

La mesure d'un taux de comptage de chambre à fission à l'aide d'un dispositif tel que celui représenté en figure 4 va maintenant être décrite.

La détermination du taux de comptage comprend les étapes principales suivantes :

- établissement des conditions de mesure spécifiques à la nature rapide ou thermique du spectre neutronique ;
- mise en oeuvre d'une méthodologie de mesure.

L'établissement des conditions de mesure comprend :

- une détermination de la position longitudinale optimale de la chambre à fission, en rapport avec un taux de comptage de la chambre, la position optimale retenue correspondant à un taux de comptage maximum, et donc à une durée de comptage minimum pour une incertitude statistique de comptage donnée,
- un réglage de la plage temporelle d'acquisition et du nombre de passes d'acquisition adapté aux performances et spécificités du générateur de neutrons,
- un réglage de la durée des acquisitions relativement à un objectif d'incertitude statistique de 1% sur les taux de comptage.

La méthodologie de mesure mise en oeuvre comprend les étapes suivantes :

- un réglage en mode PHA (PHA pour « Pulse Height Analysis ») d'un seuil de discrimination du bruit de fond contenu dans le signal d'acquisition de la chambre à fission,
- une association du seuil de discrimination à la grandeur d'étalonnage recherchée (masse efficace),
- une transposition du réglage en mode PHA à l'acquisition en mode MCS (MCS pour « Multi-Channel Scaler ») du signal dynamique des chambres à fission pendant le fonctionnement du générateur de neutrons, et
- un monitorage des mesures obtenues de façon à s'affranchir des fluctuations de fonctionnement du générateur de neutrons d'une mesure à l'autre.

Les différents points mentionnés ci-dessus vont maintenant être précisés

Détermination de la position optimale de la chambre

Préférentiellement, il convient dans un premier temps de déterminer la position optimale de la chambre à fission dans la cellule de mesure de façon à réduire au mieux la durée des acquisitions nécessaire à l'obtention d'une incertitude statistique de 1% sur les taux de comptage obtenus. Cette étape n'est pas obligatoire mais elle est recommandée pour gagner du temps et réduire autant que possible l'usure du générateur de neutrons.

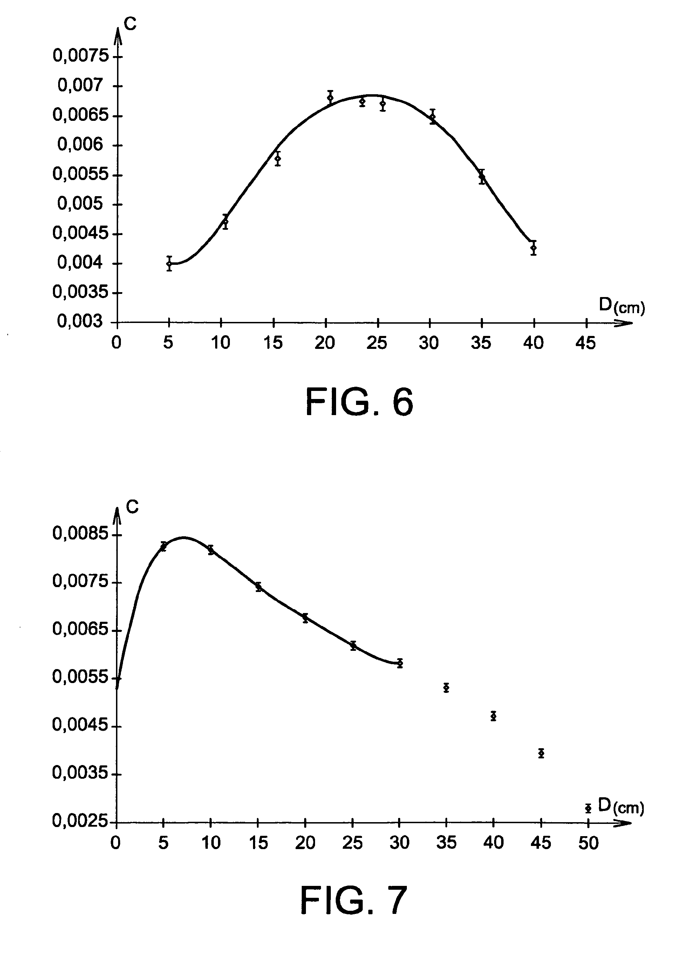

La figure 6 représente, dans le cas d'un spectre neutronique rapide, un exemple de courbe de taux de fission normalisé C mesuré en fonction de la position qu'occupe une chambre à fission dans la cellule de mesure (distance D de la chambre par rapport à l'ouverture O). Dans l'exemple choisi, la chambre à fission contient environ 100$\mu$g d'Uranium-235 et la distance D qui sépare la chambre de l'ouverture O varie de 5cm à 40cm. A titre indicatif, la durée d'acquisition de chaque mesure est de 800s, ce qui permet d'obtenir des comptages compris entre 2000 coups et 3500 coups sur une région d'intérêt comprise entre 30 μs et 230 μs. En effet, du fait de la coupure des neutrons thermiques dans le borolène, aucun neutron n'atteint la chambre à fission en dehors de cette plage de temps. La position retenue est celle correspondant au taux de comptage maximum. Dans l'exemple de la figure 6, la position optimale obtenue est située à 23cm de l'ouverture O de la cavité 5. Cette position est alors retenue pour l'ensemble des mesures d'étalonnage en configuration de neutrons rapides.

La figure 7 représente un exemple de courbe de taux de fission normalisé C mesuré en fonction de la position qu'occupe la chambre à fission dans la cellule de mesure dans le cas d'un spectre neutronique thermique. Dans l'exemple choisi, la chambre à fission contient environ 100μg d'Uranium-235 et la position de la distance D varie de 0 à 40cm. A titre indicatif, la durée d'acquisition de chacune des mesures est de 560s. Cette durée permet d'obtenir des comptages compris entre 10000 coups et 30000 coups sur une région d'intérêt comprise entre 700μs et 3500μs. Cette plage de temps correspond aux instants pendant lesquels la population de neutrons thermiques d'énergie inférieure à 0,625 eV est supérieure à 99.9%. Le taux de comptage maximum est ici observé à la position de 5cm. Cette position est alors retenue pour l'ensemble des mesures d'étalonnage en configuration thermique.

Dans l'ensemble des dispositifs, la précision associée au positionnement du dépôt fissile de la chambre à fission est de l'ordre de 3mm, incluant l'incertitude sur le positionnement de la chambre à fission dans le dispositif et l'incertitude sur le positionnement du dépôt dans la chambre à fission. Ces imprécisions conduisent à une incertitude de l'ordre de 0,1% sur le taux de comptage de la chambre à fission, ce qui est quasiment négligeable.

Plage d'acquisition - Nombre de passes - Durée d'acquisition

Les paramètres de fonctionnement et d'acquisition d'une mesure sont les suivants :

- la fréquence de tir du générateur de neutrons, par exemple une fréquence de 125Hz, ce qui correspond à une durée entre deux impulsions du générateur de neutrons égale à 8000μs ;
- le nombre de passes, c'est-à-dire le nombre de tirs du générateur de neutrons, qu'il est nécessaire d'adapter à l'intégrale de comptage minimale recherchée, par exemple 10000 coups, sur une plage de temps donnée, à savoir, pour la fréquence de 125Hz mentionnée ci-dessus, la plage 30μs - 230μs dans les dispositifs à neutrons rapides et la plage 700μs - 3500μs dans les dispositifs à neutrons thermiques,
- la durée d'acquisition qui est égale au nombre de passes multiplié par la durée entre deux impulsions du générateur de neutrons (la durée d'acquisition varie en fonction de la nature et des dépôts contenus dans la chambre à fission et est typiquement égale à dix minutes pour un dispositif à neutrons thermiques et à une heure pour un dispositif à neutrons rapides lorsque la chambre à fission contient de l'ordre de 100μg d'actinide).

La méthodologie de mesure va maintenant être décrite.

Réglage en mode PHA du seuil de discrimination du bruit de fond - Association de ce seuil de discrimination à la grandeur d'étalonnage recherchée

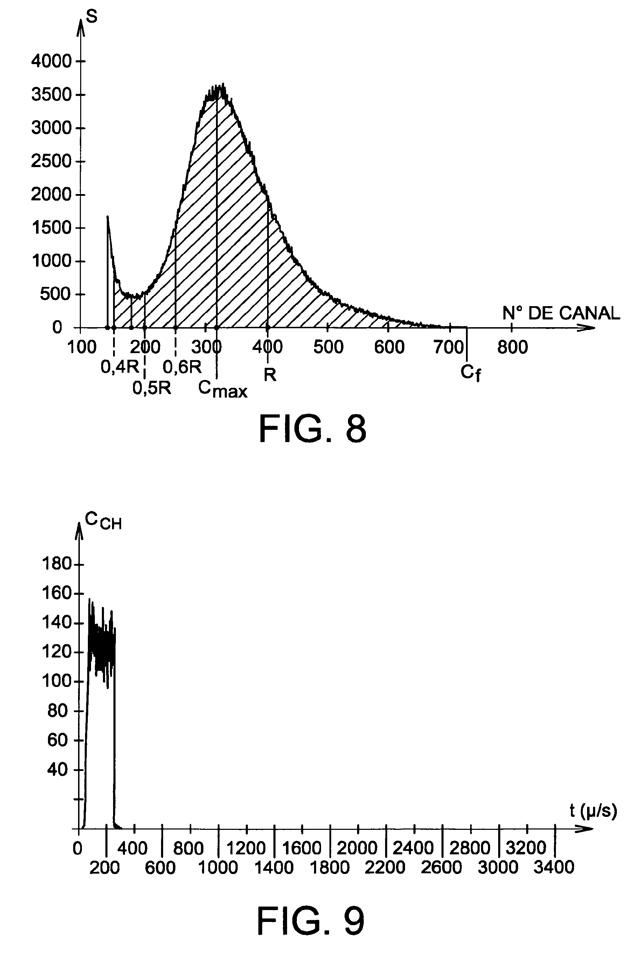

Selon un perfectionnement de l'invention, il est prévu de ne pas prendre en compte, dans le signal délivré par la chambre à fission, le bruit de fond électronique ou le bruit dû à des particules ou à des rayonnements autres que les neutrons. En illustration, la figure 8 représente un exemple de spectre S de chambre à fission dans lequel des raies de bruit apparaissent. Ces raies de bruit sont présentes dans les premiers canaux du signal.

La stratégie adoptée pour supprimer ces bruits est de fixer un seuil de discrimination permettant d'exclure le bruit de fond contenu dans les premiers canaux du signal et, en conséquence, de n'intégrer que la partie utile du signal correspondant aux réactions neutroniques.

La méthode employée consiste à réaliser une acquisition du signal de la chambre à fission en mode PHA (reliant le nombre de coups à l'amplitude du signal), puis à relier le seuil de discrimination à la forme du signal qui est propre à la chambre à fission, puisque cette forme est relative à l'énergie déposée par les produits de fission dans la chambre. Une intégrale de comptage est associée au seuil de discrimination. On associe alors une valeur de la grandeur d'étalonnage (i.e. une valeur de masse efficace du dépôt fissile dans la chambre à fission) à cette intégrale de comptage. A titre indicatif, la méthode comprend les étapes suivantes :

- un repérage du canal Cmax correspondant au comptage maximum du spectre,
- un calcul de la moyenne des comptages sur, par exemple, dix canaux situés de part et d'autre du canal Cmax, soit $V_{moy}$ cette valeur moyenne,
- un repérage, sur le spectre, du canal correspondant à la valeur $V_{moy}/2$,
- une régression linéaire autour de la zone située entre cinq points qui précèdent et cinq points qui succèdent à $V_{moy}/2$,

- une détermination de l'équation de la droite obtenue du fait de la régression linéaire,
- à l'aide de l'équation de la droite ainsi obtenue, une détermination du canal R correspondant à $V_{moy}/2$, et l'adoption d'une précision, par exemple, à deux décimales (il apparaît que le canal R est uniquement fonction de la forme du spectre délivré et ne varie pas en fonction de la nature du spectre neutronique),
- un calcul de la valeur des canaux correspondant à une fraction du canal R (par exemple 0,4 R, 0,5 R et 0,6R) en gardant toujours le même nombre de décimales pour la précision,
- une identification du seuil de discrimination comme étant la fraction de canal R correspondant au mieux au canal « vallée » Cv (par exemple 0,5 R (cf. figure 8)),
- un calcul de l'intégrale de comptage comprise entre le seuil de discrimination et le canal de fin de comptage Cf (voir figure 8). Le canal Cf est **caractérisé en ce que** tous les canaux supérieurs à Cf correspondent à un taux de comptage nul.

On aura bien entendu intérêt à privilégier un maximum de signal utile, c'est-à-dire à retenir un seuil d'intégration au plus proche du canal « vallée » Cv (voir figure 8).

Cette méthode de détermination du seuil de discrimination n'est pas unique, d'autres méthodes pouvant être utilisées. Toutefois, cette méthode permet de s'affranchir a priori de tout changement des conditions de mesure (gain de l'amplificateur, constante de mise en forme du signal, énergie des neutrons incidents...). Par retour d'expérience, elle rajoute en moyenne une incertitude de 0,5% sur les taux de comptage mesurés.

Transposition du réglage en mode PHA à l'acquisition en mode MCS du signal dynamique

Tel que vu précédemment, l'obtention des grandeurs d'étalonnage nécessite de ne considérer le signal des chambres à fission que sur une certaine plage de temps comprise entre deux tirs du générateur de neutrons, afin de répondre aux objectifs en terme de pureté du spectre neutronique.

L'acquisition des signaux des chambres à fission en mode MCS (échelle de comptage rangeant le nombre d'événements en fonction du temps) est donc nécessaire, de façon à pouvoir suivre le signal au cours du temps.

Il convient donc de régler le seuil bas du discriminateur de façon qu'il corresponde parfaitement au seuil d'intégration choisi (voir paragraphe précédent).

Il suffit pour cela de multiplier le seuil d'intégration préalablement défini en mode PHA pour chaque chambre par la grandeur G telle que :

$$G = \frac{\text{Gamme en volt du discri min ateur}}{\text{Nombre de canaux d'acquisition}},$$

pour obtenir en volt la valeur de réglage du seuil bas du discriminateur. A titre d'exemple non limitatif, et de façon connue en soi, le nombre de canaux pour l'analyse des mesures est égal à 1024 et la gamme en Volt du discriminateur est égale à 10.

La détermination du seuil bas de discrimination étant exacte, on peut alors considérer que l'incertitude associée est nulle.

Monitorage des mesures

De façon à s'affranchir des fluctuations de fonctionnement du générateur de neutrons d'une mesure à l'autre (flux de neutrons émergeant ou usure du générateur), il est nécessaire de surveiller l'émission neutronique du générateur de neutrons, de façon à normaliser l'ensemble des mesures effectuées en référence à un fonctionnement identique du générateur de neutrons. C'est à cette fin que le dispositif d'étalonnage comprend un compteur de neutrons K. Le compteur K peut être positionné à l'intérieur ou à l'extérieur de la cellule de mesure. A titre d'exemple non limitatif, le compteur K est représenté à l'extérieur de la cellule de mesure sur la figure 1. Le monitorage peut être réalisé à l'aide de tout type de détecteur de neutrons. A titre d'exemple non limitatif, le compteur K est un compteur Hélium 3 positionné à proximité, par exemple quelques dizaines de centimètres, de la cellule de mesure.

Durant toute la procédure de mesure de taux de comptage et, partant, de la procédure d'étalonnage, il est préférable de ne pas déplacer le compteur K par rapport à la chambre à fission et au générateur de neutrons.

Le principe du monitorage est d'enregistrer systématiquement et de façon synchronisée le comptage du compteur K et le comptage de la chambre à fission. L'ensemble des mesures délivrées par la chambre à fission est ensuite normalisé en référence au comptage moyen du compteur K (circuit 34).

On peut alors considérer, en faisant l'hypothèse que le signal délivré par le compteur K est stable dans le temps, que les seules incertitudes à prendre en compte sont les incertitudes statistiques de comptage de la chambre.

Validation du dispositif d'étalonnage de l'invention

Une validation du dispositif de mesure de taux de comptage de l'invention va maintenant être décrite sur la base de résultats de mesures illustrés par les figures 9-12. Un exemple de taux de comptage $C_{CH}$ en fonction du temps délivré par une chambre à fission Uranium-235 de dispositif à neutrons rapides est donné en figure 9. On constate que le signal suit globalement l'impulsion d'émission du générateur de neutrons dans l'intervalle de temps 30 $\mu$s - 230 $\mu$s. Le signal est bien annulé au delà de 230$\mu$s, ce qui valide la qualité du dispositif rapide en matière d'arrêt des neutrons thermalisés dans le graphite environnant.

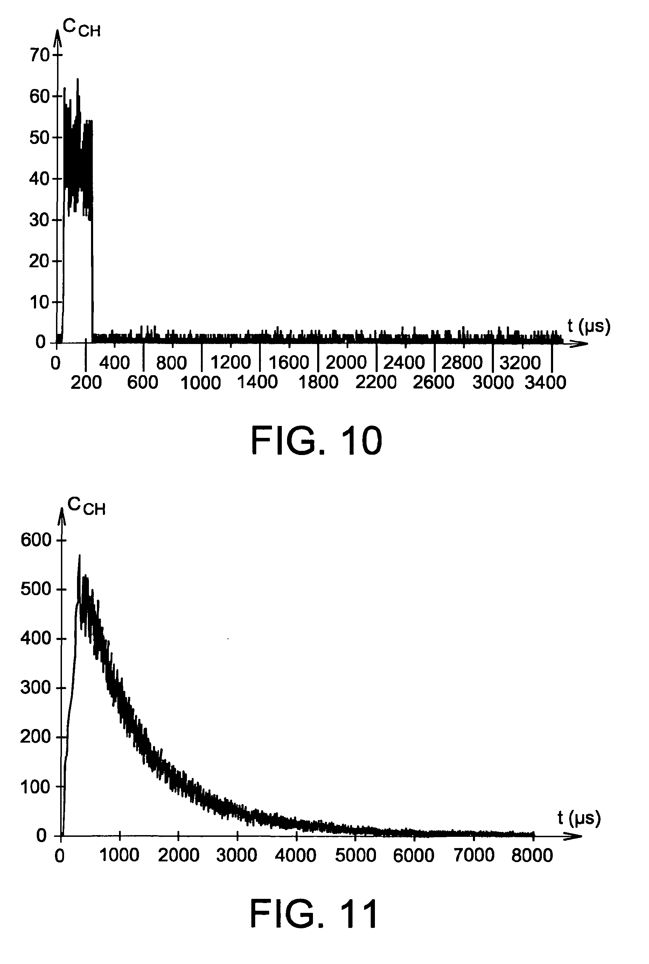

Pour les dispositifs à neutrons thermiques, deux exemples de mesure de taux de comptage $C_{CH}$ obtenus avec des chambres à fission Neptunium-237 et Uranium-235 sont donnés respectivement en figures 10 et 11.

On constate, pour la chambre à fission Neptunium-237, que le signal suit dans un premier temps l'impulsion d'émission du générateur de neutrons, compris dans l'intervalle de temps 30 $\mu$s - 230 $\mu$s, puis s'annule, ce qui signifie qu'au-delà de l'émission de l'impulsion du générateur de neutrons, aucun neutron rapide n'est plus observé dans les dispositifs thermiques (en particulier sur la plage temporelle 700$\mu$s - 3500$\mu$s retenue dans l'étude), du fait que le Neptunium-237 présente une section efficace de fission nulle dans le domaine thermique. On constate de plus que le signal de la chambre à fission Uranium-235 (isotope fissile aux neutrons thermiques) suit dans un premier temps l'impulsion d'émission du générateur de neutrons, compris dans l'intervalle de temps 30 $\mu$s - 230 $\mu$s, puis continue à évoluer sans s'annuler au fur et à mesure que les neutrons thermiques arrivent au niveau du détecteur après avoir traversé le graphite de la cellule de mesure.

Les éléments ci-dessus valident la conception de la cellule d'étalonnage à l'aide des calculs du code de Monte Carlo MCNP4C2, comme cela a été mentionné précédemment, et pour lesquels il a été convenu d'analyser l'ensemble des mesures sur l'intervalle de temps 700 $\mu$s - 3500$\mu$s, correspondant à l'interrogation de la chambre à fission par des neutrons thermiques d'énergie inférieure à 0,625 eV dans plus de 99,9% des cas.

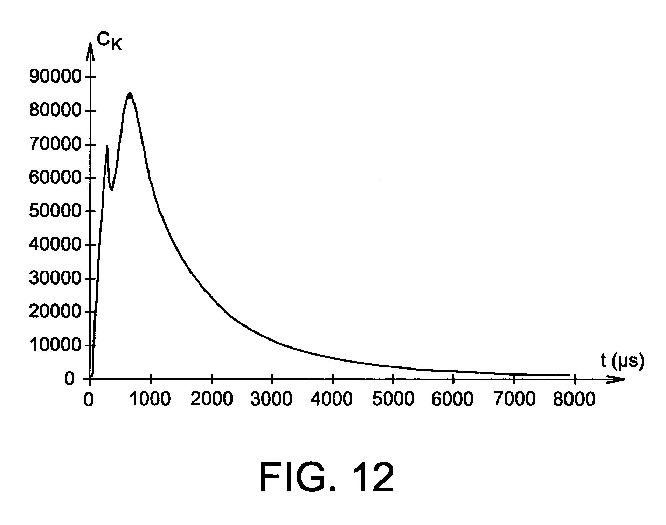

A titre d'illustration, la figure 12 représente le taux de comptage $C_K$ détecté par un compteur Hélium 3 utilisé comme moniteur pour l'ensemble des mesures. Le compteur, positionné à l'arrière de la cellule, voit tout d'abord arriver les neutrons rapides émis pendant l'impulsion du générateur puis, de façon retardée, les neutrons plus ou moins thermalisés dans le graphite et le polyéthylène de la cellule de mesure.

A titre indicatif, des intégrales de comptages supérieures ou égales à 10000 coups (relatives à une incertitude statistique de 1%) ont été obtenues durant environ une heure en dispositif à neutrons rapides et durant environ dix minutes en dispositif à neutrons thermiques, à partir d'une chambre à fission contenant de l'ordre de 100$\mu$g de matière fissile et d'un générateur de neutrons fonctionnant en mode impulsionnel à une fréquence de 125Hz et avec une émission neutronique de $3.10^9$n.s$^{-1}$. Ces éléments valident également la conception des dispositifs.

**Revendications**

1. Dispositif de mesure de taux de comptage d'au moins une chambre à fission (CH) qui contient de la matière fissile, ledit dispositif comprenant

   - une cellule de mesure (1) qui contient la chambre à fission (CH),
   - un générateur de neutrons (6) qui émet des neutrons sous forme d'impulsions périodiques en direction de la chambre à fission,
   - un câble de mesure (11) qui prélève, via un connecteur (12), un signal délivré par la chambre à fission suite à l'interaction des neutrons avec la matière fissile,
   - un compteur de neutrons (K) qui délivre un signal de comptage des neutrons émis par le générateur de neutrons (6),

   ledit dispositif étant **caractérisé en ce qu'**il comprend en outre :

   - un système de traitement (ST) qui délivre, sur une fenêtre temporelle prédéterminée contenue à l'intérieur d'une période d'émission des neutrons émis par le générateur de neutrons, un signal représentatif du signal délivré par la chambre à fission et un signal représentatif du signal de comptage des neutrons, et
   - un circuit de calcul (34) de taux de comptage (C) de la chambre à fission normalisé en référence au signal de comptage des neutrons, à partir du signal représentatif du signal délivré par la chambre à fission et du signal représentatif du signal de comptage des neutrons.

2.  Dispositif selon la revendication 1, dans lequel :

    - la cellule de mesure (1) comprend une structure (3) dans laquelle est formée une cavité cylindrique (5) qui débouche par une ouverture (O) sur une paroi de la structure,
    - une première enveloppe cylindrique (9) est placée sur une paroi de la cavité cylindrique (5), la première enveloppe cylindrique contenant la chambre à fission (CH), le connecteur (12) et une première partie du câble de mesure (11),
    - une deuxième enveloppe cylindrique (8) entoure à distance la première enveloppe cylindrique (9), la première et la deuxième enveloppes cylindriques ayant, chacune, une première extrémité fixée, dans la structure, par une première bague (15) située du côté où la cavité débouche sur la paroi de la structure et une deuxième extrémité fixée, dans la structure, par une deuxième bague (16),
    - une troisième enveloppe cylindrique (17) située à l'extérieur de la structure est sensiblement alignée avec la première enveloppe cylindrique (9), la troisième enveloppe cylindrique (17) contenant une deuxième partie du câble de mesure qui prolonge la première partie et une bague de centrage (14) qui maintient le câble dans la deuxième enveloppe (17).

3.  Dispositif selon la revendication 2 et qui comprend :

    - une feuille de matériau (13) qui recouvre la première enveloppe cylindrique (9), et
    - une structure cylindrique creuse (10) placée entre la feuille de matériau (13) et la deuxième enveloppe cylindrique (8).

4.  Dispositif selon la revendication 3, dans lequel la feuille de matériau (13) est une feuille de cadmium.

5.  Dispositif selon la revendication 3 ou 4, dans lequel le matériau qui constitue la structure cylindrique creuse (10) placée sur la feuille de matériau est du borolène.

6.  Dispositif selon la revendication 2, dans lequel la première enveloppe cylindrique (9) et la deuxième enveloppe cylindrique (8) sont séparées par un espace rempli d'air.

7.  Dispositif selon l'une quelconque des revendications 2 à 6, dans lequel la structure (3) dans laquelle la cavité (5) est formée est en graphite.

8.  Dispositif selon l'une quelconque des revendications 2 à 7, dans lequel le générateur de neutrons (6) est intégré dans la structure (3) de la cellule de mesure.

9.  Dispositif selon l'une quelconque des revendications 2 à 8, dans lequel le compteur de neutrons (K) est intégré dans la structure (3) de la cellule de mesure.

10. Dispositif d'étalonnage destiné à mesurer une masse efficace de matière fissile contenue dans au moins une chambre à fission, **caractérisé en ce qu'**il comprend un dispositif de mesure de taux de comptage selon l'une quelconque des revendications 1 à 9 et un circuit de calcul (35) de la masse efficace du matériau fissile (m) à partir du taux de comptage (C) délivré par le circuit de calcul (34) de taux de comptage.

11. Procédé de mesure de taux de comptage d'au moins une chambre à fission (CH) qui contient de la matière fissile, comprenant :

    - une émission de neutrons sous forme d'impulsions périodiques en direction de la chambre à fission de sorte que la chambre à fission délivre un signal qui résulte de l'interaction des neutrons avec la matière fissile,
    - un comptage des neutrons émis pour former un signal de comptage,
    le procédé étant **caractérisé en ce qu'**il comprend :
    - un traitement du signal délivré par la chambre à fission et du signal de comptage sur une fenêtre temporelle prédéterminée contenue à l'intérieur d'une période d'émission des neutrons émis pour délivrer un signal représentatif du signal délivré par la chambre à fission et un signal représentatif du signal de comptage, et
    - un calcul du taux de comptage de la chambre à fission normalisé en référence au signal de comptage à partir du signal représentatif du signal délivré par la chambre à fission et du signal représentatif du signal de comptage.

**Claims**

1. Count rate measurement device of at least one fission chamber (CH) that contains fissile material, said device comprising:

   - a measurement cell (1) that contains the fission chamber (CH),
   - a neutron generator (6), which emits neutrons in the form of periodic pulses towards the fission chamber,
   - a measurement cable (11), which collects, via a connector (12), a signal delivered by the fission chamber following the interaction of the neutrons with the fissile material,
   - a neutron counter (K) that delivers a neutron count signal emitted by the neutron generator (6),
   - said device being **characterized in that** it further comprises:
   - a processing system (ST) that delivers, over a predetermined time interval contained within a period of emission of the neutrons emitted by the neutron generator, a signal representative of the signal delivered by the fission chamber and a signal representative of the neutron count signal, and
   - a circuit (34) for computing the count rate (C) of the fission chamber normalized with reference to the neutron count signal, from the signal representative of the signal delivered by the fission chamber and the signal representative of the neutron count signal.

2. Device according to claim 1, wherein:

   - the measurement cell (1) comprises a structure (3) in which is formed a cylindrical cavity (5) that opens via an opening (O) into a wall of the structure,
   - a first cylindrical jacket (9) is placed on a wall of the cylindrical cavity (5), the first cylindrical jacket containing the fission chamber (CH), the connector (12) and a first part of the measurement cable (11),
   - a second cylindrical jacket (8) surrounds at distance the first cylindrical jacket (9), the first and the second cylindrical jackets having, each, a first end fixed, in the structure, by a first ring (15) situated on the side where the cavity opens into the wall of the structure and a second end fixed, in the structure, by a second ring (16),
   - a third cylindrical jacket (17) situated at the end of the structure is substantially aligned with the first cylindrical jacket (9), the third cylindrical jacket (17) containing a second part of the measurement cable that extends the first part and a centring ring (14), which maintains the cable in the second jacket (17).

3. Device according to claim 2 and which comprises:

   - a sheet of material (13) that covers the first cylindrical jacket (9), and
   - a hollow cylindrical structure (10) placed between the sheet of material (13) and the second cylindrical jacket (8) .

4. Device according to claim 3, wherein the sheet of material (13) is a sheet of cadmium.

5. Device according to claim 3 or 4, wherein the material that constitutes the hollow cylindrical structure (10) placed on the sheet of material is borolene.

6. Device according to claim 2, wherein the first cylindrical jacket (9) and the second cylindrical jacket (8) are separated by an air filled space.

7. Device according to any of claims 2 to 6, wherein the structure (3) in which the cavity (5) is formed is made of graphite.

8. Device according to any of claims 2 to 7, wherein the neutron generator (6) is integrated in the structure (3) of the measurement cell.

9. Device according to any of claims 2 to 8, wherein the neutron counter (K) is integrated in the structure (3) of the measurement cell.

10. Calibration device intended to measure an effective mass of fissile material contained in at least one fission chamber, **characterised in that** it comprises a count rate measurement device according to any of claims 1 to 9 and a circuit (35) for computing the effective mass of the fissile material (m) from the count rate (C) delivered by the count rate computing circuit (34).

11. Method of measuring the count rate of at least one fission chamber (CH) that contains the fissile material, the method comprising:

- an emission of neutrons in the form of periodic pulses towards the fission chamber so that the fission chamber delivers a signal that results from the interaction of the neutrons with the fissile material,
- a counting of the neutrons emitted to form a counting signal,
the method being **characterized in that** it comprises:
- a processing of the signal delivered by the fission chamber and the counting signal over a predetermined time interval contained within a period of emission of the neutrons emitted to deliver a signal representative of the signal delivered by the fission chamber and a signal representative of the counting signal, and
- a computation of the count rate of the fission chamber normalized with reference to the counting signal from the signal representative of the signal delivered by the fission chamber and from the signal representative of the counting signal.

**Patentansprüche**

1. Vorrichtung zur Messung einer Zählrate wenigstens einer Spaltungskammer (CH), die spaltbares Material enthält, wobei die Vorrichtung umfasst:

   - Eine Messzelle (1), die die Spaltungskammer (CH) enthält,
   - einen Neutronengenerator (6), der Neutronen in Form von periodischen Pulsen in Richtung auf die Spaltungskammer zu emittiert,
   - ein Messkabel (11), das über einen Verbinder (12) ein Signal abzweigt, das von der Spaltungskammer in Folge der Wechselwirkung der Neutronen mit dem spaltbaren Material geliefert wird,
   - einen Neutronenzähler (K), der ein Zählsignal betreffend die vom Neutronengenerator (6) emittierten Neutronen liefert,
   wobei die Vorrichtung **dadurch gekennzeichnet ist, dass** sie ferner umfasst:
   - Ein Verarbeitungssystem (ST), das in einem vorbestimmten Zeitfenster, welches in einer Emissionsperiode der vom Neutronengenerator emittierten Neutronen enthalten ist, ein Signal liefert, welches repräsentativ ist für das von der Spaltungskammer gelieferte Signal, sowie ein Signal, welches repräsentativ ist für das Neutronenzählsignal, und
   - eine Schaltung (34) zur Berechnung der Zählrate (C) der Spaltungskammer, die mit Bezug zum Neutronenzählsignal normiert ist, ausgehend von dem Signal, welches repräsentativ ist für das von der Spaltungskammer gelieferte Signal, sowie von dem Signal, welches repräsentativ ist für das Neutronenzählsignal.

2. Vorrichtung nach Anspruch 1, wobei:

   - Die Messzelle (1) eine Struktur (3) umfasst, in der eine zylindrische Kavität (5) gebildet ist, die mittels einer Öffnung (O) in eine Wand der Struktur mündet,
   - eine erste zylindrische Umhüllung (9) auf einer Wand der zylindrischen Kavität (5) angeordnet ist, wobei die erste zylindrische Umhüllung die Spaltungskammer (CH), den Verbinder (12) sowie einen ersten Teil des Messkabels (11) enthält,
   - eine zweite zylindrische Umhüllung (8) mit Abstand die erste zylindrische Umhüllung (9) umgibt, wobei die erste und die zweite zylindrische Umhüllung jeweils ein erstes Ende aufweisen, das in der Struktur mittels eines ersten Rings (15) befestigt ist, der sich auf der Seite befindet, wo die Kavität in die Wand der Struktur mündet, sowie ein zweites Ende, das in der Struktur mittels eines zweiten Rings (16) befestigt ist,
   - eine dritte zylindrische Umhüllung (17), die außerhalb der Struktur angeordnet ist, im Wesentlichen mit der ersten zylindrischen Umhüllung (9) ausgerichtet ist, wobei die dritte zylindrische Umhüllung (17) einen zweiten Teil des Messkabels enthält, der das erste Teil verlängert, sowie einen Zentrierring (14), der das Kabel in der zweiten Umhüllung (17) hält.

3. Vorrichtung nach Anspruch 2, die umfasst:

   - Eine Materialschicht (13), die die erste zylindrische Umhüllung (9) bedeckt, und
   - eine hohle zylindrische Strukur (10), die zwischen der Materialschicht (13) und der zweiten zylindrische Umhüllung (8) angeordnet ist.

4. Vorrichtung nach Anspruch 3, bei der die Materialschicht (13) eine Schicht aus Kadmium ist.

5. Vorrichtung nach Anspruch 3 oder 4, bei der das Material, aus dem die hohle zylindrische Struktur (10) gebildet ist, die auf der Materialschicht angeordnet ist, Borolen ist.

6. Vorrichtung nach Anspruch 2, wobei die erste zylindrische Umhüllung (9) und die zweite zylindrische Umhüllung (8) durch einen mit Luft gefüllten Raum getrennt sind.

7. Vorrichtung nach einem der Ansprüche 2 bis 6, bei der die Struktur (3), in der die Kavität (5) gebildet ist, aus Graphit ist.

8. Vorrichtung nach einem der Ansprüche 2 bis 7, bei der der Neutronengenerator (6) in der Struktur (3) der Messzelle integriert ist.

9. Vorrichtung nach einem der Ansprüche 2 bis 8, bei der der Neutronenzähler (K) in der Struktur (3) der Messzelle integriert ist.

10. Kalibrierungsvorrichtung zur Messung einer effektiven Masse von spaltbarem Material, das in wenigstens einer Spaltungskammer enthalten ist, **dadurch gekennzeichnet, dass** sie eine Vorrichtung zum Messen der Zählrate nach einem der Ansprüche 1 bis 9 sowie eine Schaltung (35) zur Berechnung der effektiven Masse des spaltbaren Materials (m) ausgehend von der Zählrate C enthält, die von der Schaltung (34) zur Berechnung der Zählrate geliefert wird.

11. Verfahren zur Messung einer Zählrate wenigstens einer Spaltungskammer (CH), die spaltbares Material enthält, umfassend:

   - Eine Emission von Neutronen in Form von periodischen Pulsen in Richtung auf die Spaltungskammer zu, derart, dass die Spaltungskammer ein Signal liefert, welches aus der Wechselwirkung der Neutronen mit dem spaltbaren Material resultiert,
   - eine Zählung der emittierten Neutronen, um ein Zählsignal zu bilden,
   wobei das Verfahren **dadurch gekennzeichnet ist, dass** es umfasst:
   - Eine Verarbeitung des von der Spaltungskammer gelieferten Signals und des Zählsignals in einem vorbestimmten Zeitfenster, das in einer Emissionsperiode der emittierten Neutronen enthalten ist, um ein Signal zu liefern, welches repräsentativ ist für das von der Spaltungskammer gelieferte Signal, sowie ein Signal, welches repräsentativ ist für das Zählsignal, und
   - eine Berechnung der Zählrate der Spaltungskammer, die mit Bezug zum Zählsignal normiert ist, ausgehend von dem Signal, welches repräsentativ ist für das von der Spaltungskammer gelieferte Signal, sowie von dem Signal, das repräsentativ ist für das Zählsignal.

**FIG. 1**

FIG. 2

FIG. 3

# FIG. 4

FIG. 5

FIG. 6

FIG. 7

FIG. 8

FIG. 9

FIG. 10

FIG. 11

FIG. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2670301 A